# EUROPÄISCHE PATENTSCHRIFT

(11) **EP 1 542 175 B1**
(45) Veröffentlichungstag und Bekanntmachung des Hinweises auf die Patenterteilung: **15.11.2006**
(21) Anmeldenummer: 04021944.6
(22) Anmeldetag: 15.09.2004
(51) Int. Cl.: G07D 9/00, G07F 11/58, B65G 47/57

(54) **Vorrichtung und Verfahren zum Vereinzeln von einer in einem Behälter gestapelten Stückgütermenge**
Device and method for singulating stacked articles from within a bin
Dispositif et méthode pour séparer des articles empilés dans une caisse

(30) Priorität: 09.12.2003 DE 10357466
(43) Veröffentlichungstag der Anmeldung: 15.06.2005
(73) Patentinhaber: Gunnebo Kubon GmbH, 54294 Trier (DE)
(72) Erfinder: Kubon, Klaus, 54296 Trier (DE); Büttner, Günther, 54329 Konz (DE); Kühn, Horst, 54294 Trier (DE)
(74) Vertreter: Lang, Friedrich

(56) Entgegenhaltungen:
- WO-A-98/13792
- DE-A1- 4 020 546
- DE-A1- 10 007 747

## Beschreibung

Die Erfindung betrifft eine Vorrichtung zum Vereinzeln von einer in einem Behälter gestapelten Stückgütermenge aus einer Vielzahl von rollbaren Stückgütern. Dabei weist der Behälter zumindest einen die Stückgütermenge von unten stützenden Behälterabschnitt und eine Auslassöffnung auf. Im Anschluss an die Auslassöffnung ist eine an der Auslassöffnung vorbei bewegbare Mitnehmervorrichtung vorgesehen. Die Zuführung des Stückguts aus dem Behälter in die Mitnehmervorrichtung erfolgt dadurch, dass die Mitnehmervorrichtung infolge eines aus dem Eigengewicht des Stückguts resultierenden Druckes beaufschlagt wird.

Das Dokument DE 40 20 546 A1 offenbart eine Ausgabeeinheit für Münzrollen.

Derartige Vereinzelungsvorrichtungen werden beispielsweise zum Vereinzeln von rollbaren Gegenständen wie Dosen, Flaschen, Münzrollen und insbesondere von zylindrischen, stabförmigen bzw. kugelförmigen Gegenständen eingesetzt. Dabei werden üblicherweise rollbare Stückgüter gleicher geometrischer Form in dem Behälter lose übereinander gestapelt. Die Zuführung der Stückgüter vom Behälter zur Mitnehmervorrichtung erfolgt dabei selbsttätig infolge der Wirkung des Eigengewichts des jeweiligen Stückguts. Für die Zuführung des Stückguts vom Behälter zur Mitnehmervorrichtung ist vorgesehen, eine Auslassöffnung in einer Seitenwand oder dem Boden des Behälters anzuordnen. Diese der Mitnehmervorrichtung zugeordnete Auslassöffnung kann dabei einen Öffnungsquerschnitt aufweisen, der entweder einen einzelnen oder einen gruppenweisen Durchtritt der Stückgüter durch die Auslassöffnung ermöglicht. Bei beiden Varianten der Stückgüterzuführung hat sich beim Gebrauch der Vereinzelungsvorrichtung herausgestellt, dass ein im Bereich der Auslassöffnung innerhalb des Behälters auftretender Anstau der Stückgüter zu einer Verkeilung der Stückgüter führt. Zu den vorgenannten Problemen kommt es insbesondere bei der Verwendung der Vereinzelungsvorrichtung für Stückgüter mit unterschiedlichen Rolleigenschaften oder mit schlechten Rolleigenschaften bei hohen Speicherkapazitäten.

Bei einem Behälter mit einer Auslassöffnung, deren Querschnitt so groß ist, dass die im Anschluss angeordnete Mitnehmervorrichtung von mehreren Stückgütern gleichzeitig beaufschlagt werden kann, hat sich insbesondere bei einer hohen Speicherkapazität des Behälters herausgestellt, dass die Stückgütermenge die Mitnehmervorrichtung blockiert und zu einem Stillstand der Mitnehmervorrichtung führt. Diese Problematik betrifft auch Behälter, welche mit Stückgütern mit unterschiedlichen Rolleigenschaften befüllt werden, wie z.B. in Papier oder Kunststoff rollierten Münzen oder ähnliche zylindrische Körper mit schlechten oder unterschiedlichen Rolleigenschaften.

Der Erfindung liegt die Aufgabe zu Grunde, eine Vorrichtung und ein Verfahren zum Vereinzeln zu schaffen, wobei eine Blockierung der Mitnehmervorrichtung und eine Verkeilung der Stückgüter innerhalb des Behälters, insbesondere im Bereich der Auslassöffnung, verhindert wird. Es ist weiterhin Aufgabe der Erfindung, eine vollständige Entleerung des Behälters auch bei schlechten bzw. unterschiedlichen Rolleigenschaften oder einer geringen Anzahl von Stückgütern in dem Behälter zu ermöglichen.

Die Aufgabe wird für eine gattungsgemäße Vorrichtung dadurch gelöst, dass die Neigung mindestens eines Teils des Behälterabschnittes, der die Stückgütermenge von unten stützt, verstellbar ist, so dass die Druckbeaufschlagung auf die Mitnehmervorrichtung wahlweise verminderbar ist. Unter dem Behälterabschnitt, der die Stückgütermenge von unten stützt, ist in der Regel der Boden des Behälters zu verstehen. Bei einer geneigten Ausbildung des Bodens und der seitlich anschließenden Gehäusewandungen stützen all diese Gehäuseabschnitte des Behälters die Stückgütermenge jeweils zumindest teilweise von unten (vertikal), d.h. wirken der vertikal nach unten wirkenden Gewichtskraft entgegen.

Die Erfindung geht also von der Überlegung aus, zumindest einen Teil der Gewichtskraft der gesamten Stückgütermenge eines bestimmten Füllzustandes des Behälters nach Richtung und Größe so zu steuern, dass die daraus resultierende Druckveränderung zu einer Ent- bzw. Belastung der Mitnehmervorrichtung führt. Entscheidend ist also, dass der die Druckbeaufschlagung der Mitnehmervorrichtung bewirkende Gewichtskraftanteil des jeweiligen Stückguts bzw. der von den umliegenden Stückgütern auf dieses Stückgut wirkende Druck in Richtung auf die Mitnehmervorrichtung durch eine Änderung der Neigung des die Stückgütermenge vertikal stützenden Behälterabschnittes regelbar ist. Somit kann die Druckbeaufschlagung je nach Betriebszustand der Mitnehmervorrichtung und/oder Füllzustand des Behälters vermindert oder auch erhöht werden. Die Lageveränderung des Behälters bewirkt auch eine Verlagerung des Schwerpunkts der Gesamtstückgütermenge, wodurch die Zuführung der Stückgüter zur Mitnehmervorrichtung ebenfalls beeinflusst wird. Diese Regelbarkeit der Druckbeaufschlagung der Mitnehmervorrichtung ermöglicht es, Blockierungen der Mitnehmervorrichtung zu beseitigen oder vorbeugend zu verhindern, Verkeilungen der Stückgüter innerhalb des Behälters zu lösen und der Behälter zuverlässig entleeren zu können.

Eine bevorzugte Ausführungsform besteht darin, dass das gesamte Behälter verschwenkbar gelagert ist. Dies hat den Vorteil, dass herkömmliche Vereinzelungsvorrichtungen und insbesondere deren Behälter mit einfachen Mitteln erfindungsgemäß angepasst werden können. Die Neigungsverstellung des Behälters führt bei Verwendung eines quaderförmigen Behälters aufgrund der vom Boden senkrecht ausgehenden seitlichen Wandungen zu einer zusätzlichen Verlagerung des Schwerpunkts der Stückgütermenge im Vergleich zu dem Fall, bei welchem lediglich die Neigung des Bodens verändert wird und die Seitenwände ihre vorherige Neigung beibehalten.

Zweckmäßigerweise ist der Behälter quer zur Bewegungsrichtung der Mitnehmervorrichtung verschwenkbar. Dies erweist sich insbesondere dann als vorteilhaft, wenn der Behälter eine seitliche, bis zum Behälterboden reichende Auslassöffnung mit einem im Wesentlichen horizontal ausgerichteten Boden aufweist, die Mitnehmervorrichtung im direkten Anschluss an die Auslassöffnung angeordnet ist und die Bewegungsrichtung der Mitnehmervorrichtung im Wesentlichen vertikal verläuft. Hier lässt sich die Druckbeaufschlagung der Mitnehmervorrichtung durch ein Verschwenken des Behälter aus einer horizontalen Ausgangslage des Behälterbodens besonders gut regeln.

Eine weitere bevorzugte Ausführungsform besteht darin, dass der Behälter auf einem außermittig angeordneten Schwenklager gelagert ist. Dadurch wird verhindert, dass infolge der Beschickung des Behälters oder bei von außen auf der Behälter einwirkenden Kräften, eine zu diesem Zeitpunkt noch nicht erwünschte Verschwenkung des Behälters erfolgt.

Um die Zuführung der Stückgüter zur Mitnehmervorrichtung zu bewirken, ist der Behälter bzw. der die Stückgütermenge vertikal stützende Behälterabschnitt so in Richtung zur Mitnehmervorrichtung geneigt, dass die Stückgüter selbsttätig in Richtung zur Mitnehmervorrichtung rollen oder gedrückt werden. Dazu ist eine Anordnung des Schwenklagers auf der von der Mitnehmervorrichtung weg gerichteten Seite zweckmäßig, um keine vorzeitige, ungewollte Lageveränderung des Behälters und somit eine Verminderung der Druckbeaufschlagung der Mitnehmervorrichtung zu bewirken.

In einer weiteren bevorzugten Ausführungsform ist das Schwenklager an dem Behälter entlang des von unten stützenden Behälterabschnittes verschiebbar angeordnet. Dies wird beispielsweise durch eine Schienenführung erreicht.

Die erfindungsgemäße Vorrichtung ist insbesondere für eine Einrichtung zum Vereinzeln von Münzrollen vorgesehen. Unter dem Begriff "Münzrollen" sind in Papier oder Kunststoff rollierte Münzen zu verstehen. Die erfindungsgemäße Vorrichtung eignet sich im Allgemeinen für rollbare Stückgüter, z.B. kugelförmige, zylindrische, polygonförmige Körper.

Die Aufgabe wird verfahrensmäßig dadurch gelöst, dass bei einer erfindungsgemäßen Vorrichtung die Neigung mindestens eines Teils des Behälterabschnittes, der die Stückgütermenge von unten stützt, verstellt wird, so dass die Druckbeaufschlagung auf die Mitnehmervorrichtung wahlweise vermindert wird.

Bei einem bevorzugten Verfahren erfolgt die Verstellung der Neigung im Falle einer Störung der Mitnehmervorrichtung. Dies hat den Vorteil, dass bei einem wenig störanfälligen Verfahrensablauf nur die zwingend erforderlichen Neigungsänderungen durchgeführt werden müssen.

Die Verstellung der Neigung kann auch in regelmäßigen Zeitabständen erfolgen. Diese Maßnahme soll das Auftreten von Störungen vorbeugend verhindern. Zweckmäßigerweise können die Zeitabstände auch in Abhängigkeit der Stückgüter, der Häufigkeit und der Geschwindigkeit der Beschickung des Behälters und der Geschwindigkeit der Mitnehmervorrichtung gewählt werden.

Eine zumindest teilweise Rückstellung der Neigung in die vorherige Position erfolgt zweckmäßigerweise mittels einer Rückstellfeder. Diese kann am Behälter selbst oder einem gegenüberliegenden Anschlag angeordnet sein. Alternativ kann die Rückstellung auch mittels eines ausfahrbaren Druck- oder Zugstiftes erfolgen.

In einem weiteren bevorzugten Verfahren wird die Verstellung der Neigung mit einer Vibrationsbeaufschlagung zumindest eines Teils des Behälters kombiniert. Dadurch lassen sich etwaige Verkeilungen der Stückgüter noch besser lösen.

Nachfolgend wird die Erfindung anhand eines bevorzugten Ausführungsbeispiels unter Bezugnahme auf die Zeichnungen weiter erläutert. Dabei zeigen schematisch:
- Fig. 1: einen Querschnitt durch eine erfindungsgemäße Vorrichtung zum Vereinzeln in zwei verschiedenen Positionen in einer Seitenansicht; und
- Fig. 2: einen Querschnitt durch die Vorrichtung gemäß Fig. 1 mit einem schräg angestellten Boden in einer Seitenansicht;

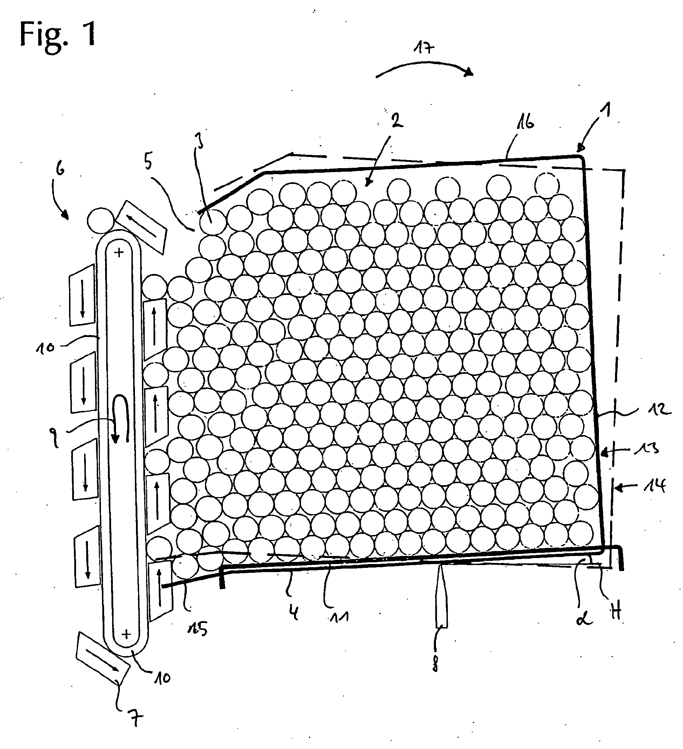

Fig. 1 zeigt eine Ausführungsform einer Vorrichtung zum Vereinzeln in einer Querschnittsseitenansicht in zwei verschiedenen Positionen. Hierbei ist in einem Behälter 1 eine Stückgütermenge 2 aus einer Vielzahl von rollbaren Stückgütern 3 lose gestapelt. Der Behälter 1 ist auf einem außermittig des Behälters 1 angeordneten Schwenklager 8 gelagert. In einer ersten Position 13 befindet sich der Behälter 1 in einer im Winkel α zur Horizontalen H geneigten Lage.

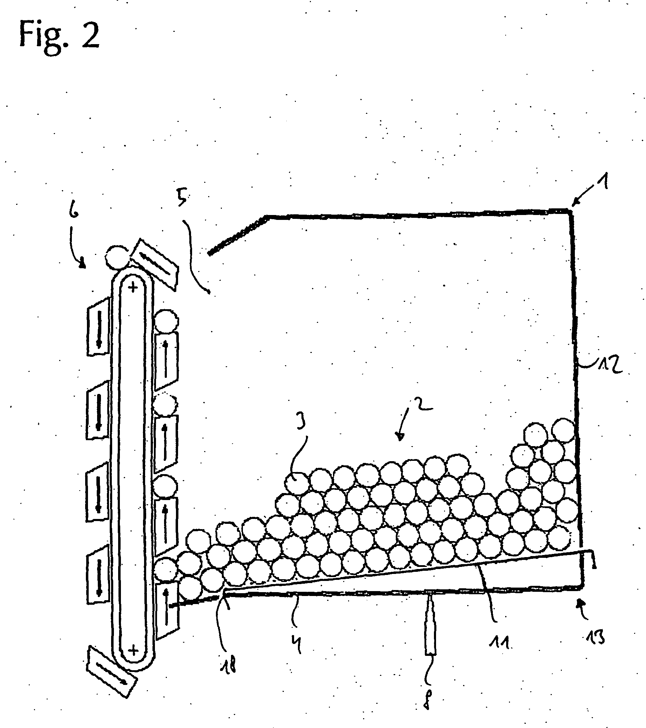

Der Behälter 1 weist einen von unten stützenden Behälterabschnitt 4 als Boden und einen darauf liegenden zweiten Boden 11 auf. Die Funktion des Bodens 11 wird in Zusammenhang mit Fig. 2 erläutert. Der Behälterabschnitt 4 läuft über eine schräg geneigte Zuführrampe 15 in Richtung zur Mitnehmervorrichtung 6 aus. Von dem Behälterabschnitt 4 geht senkrecht dazu eine Seitenwand 12 nach oben auf. Das Gehäuse des Behälters 1 weist ferner zwei in der Schnittebene liegende Seitenwände (nicht dargestellt) und einen aufklappbaren Deckel 16 auf.

Die anstelle einer Seitenwand vorgesehene Auslassöffnung 5 erstreckt sich im Wesentlichen in vertikaler Richtung über die gesamte Höhe des Behälters 1. Dadurch können mehrere Stückgüter 3 gleichzeitig sowohl in vertikaler als auch in horizontaler Richtung zu der der Auslassöffnung 5 in direktem Anschluss gegenüberliegenden Mitnehmervorrichtung 6 zugeführt werden. Die weitgehend parallel bzw. tangential zur Auslassöffnung 5 ausgerichtete und entlang dieser bewegbare Mitnehmervorrichtung 6 weist an einem Förderband 10 befestigte Mitnehmereinheiten 7 auf, welche jeweils zur Aufnahme eines einzelnen Stückguts 3 vorgesehen sind. Das Förderband 10 bewegt sich entgegen dem Uhrzeigersinn in Bewegungsrichtung 9 an der Auslassöffnung 5 vertikal nach oben vorbei. Je nach Füllzustand des Behälters 1 werden die im Bereich der Auslassöffnung 5 vorhandenen Stückgüter 3 infolge ihres Eigengewichts sowie des aus dem Gewicht der Stückgütermenge 2 resultierenden Druckes in horizontaler Richtung bzw. schräg nach unten in Richtung zur Mitnehmervorrichtung 6 gedrückt. Diese an mehreren Stellen gleichzeitig wirkende Druckbeaufschlagung führt bei herkömmlichen Vereinzelungsvorrichtungen häufig zu einer Blockierung oder sogar zum Stillstand des Förderbandes 10.

Fig. 1 zeigt insbesondere zwei verschiedene Positionen 13 und 14 des Behälters 1. Nach Beschickung des Behälters 1 mit der Stückgütermenge 2 befindet sich der Behälter 1 in einer schräg nach unten links geneigten ersten Position 13. Diese Lage ergibt sich dadurch, dass sich der Gesamtschwerpunkt der Stückgütermenge 2 etwa in der Mitte in horizontaler Richtung bezüglich des Behälters 1 befindet und gleichzeitig das Schwenklager 8 außermittig auf der von der Mitnehmervorrichtung 6 weg gerichteten Seite des Behälters 1 angeordnet ist. Der sich aus dem Abstand zwischen Gesamtschwerpunkt und Schwenklager 8 ergebende Hebelarm bewirkt ein entgegen dem Uhrzeigersinn gerichtetes Drehmoment, welches den Behälter 1 selbsttätig in die schräg geneigte Position 13 bringt. Die sich so aus der Schrägstellung des Behälters 1 ergebende Neigung α des vertikal stützenden Behälterabschnitts 4 lässt sich auch unabhängig von dem Gewicht der Stückgütermenge 2 und dem gegenseitigen Lageverhältnis von Gesamtschwerpunkt und Schwenklager 8 beispielsweise durch Aufbringen einer äußeren Kraft einstellen und wahlweise vorübergehend fixieren. Ferner kann auch eine an den Füllzustand des Behälters 1 oder an die Bewegungsrichtung 9 der Mitnehmervorrichtung 6 angepasste kontinuierliche oder abschnittsweise Verstellung der Neigung α vorgenommen werden. Die jeweilige Veränderung der Relativposition des Behälters 1 kann mittels einer bewegbaren Vorrichtung, einer Rückstellfeder oder auch von Hand erfolgen. Ebenso kann die Position des Schwenklagers 8 entlang des Behälterabschnitts 4 verändert werden.

Die mit gestrichelten Linien dargestellte zweite Position 14 zeigt die Lage des Behälters 1 nach einer Verschwenkung um das Schwenklager 8 in Richtung 17 nach hinten. Diese Schwenkverlagerung des Behälters 1 erfolgt insbesondere bei einer Störung oder Blockierung der Mitnehmervorrichtung 6 aufgrund einer zu hohen Druckbeaufschlagung durch die Stückgütermenge 2. Die Positionsveränderung des Behälters 1 bewirkt eine Verlagerung des Schwerpunkts der Stückgütermenge 2 von der Mitnehmervorrichtung 6 weg und vermindert so deren Druckbeaufschlagung. Dadurch kann der Störungszustand aufgehoben werden und der Betrieb des Förderbandes 10 fortgesetzt bzw. die Geschwindigkeit des Förderbandes 10 gesteigert werden.

Entscheidend für die Verminderung der Druckbeaufschlagung ist die Veränderung der Neigung des Behälterabschnittes 4, welche die Stückgütermenge 2 vertikal von unten stützt. Die auf den Behälterabschnitt 4 wirkende Gewichtskraft der Stückgütermenge 2 lässt sich bei einer Schrägstellung des Behälterabschnitts 4 bzw. des gesamten Behälters 1 in eine senkrecht sowie eine parallel zum Behälterabschnitts 4 wirkende Gewichtskraftkomponente aufteilen, wobei die parallel zum Behälterabschnitt 4 ausgerichtete Kraftkomponente im Wesentlichen für die Richtung und Größe der Druckbeaufschlagung der Mitnehmervorrichtung 6 verantwortlich ist. Diese Kraftkomponente wechselt insbesondere dann maßgeblich ihre Richtung, wenn der Gesamtschwerpunkt der Stückgütermenge 2 über die durch den Auflagerpunkt des Schwenklagers 8 verlaufende Vertikale hinaus auf die von der Mitnehmervorrichtung 6 weg gerichtete Seite des Behälters 1 wandert. Die Steuerung des Richtungswechsels dieser Komponente, insbesondere von einer zur Mitnehmervorrichtung 6 in eine von dieser weg gerichteten Seite, erfolgt also über die Verstellung der Neigung α des von unten stützenden Behälterabschnitts 4. Um ein zu frühzeitiges Kippen in Richtung 17 nach hinten um das Schwenklager 8 zu vermeiden, ist dieses außermittig auf der von der Mitnehmervorrichtung 6 weggerichteten Seite des Behälters 1 angeordnet.

Fig. 2 zeigt den Behälter 1 gemäß Fig. 1 in seiner ersten Position 13 mit in Richtung zur Mitnehmervorrichtung 6 geneigtem Behälter 1, welcher einen geringeren Füllzustand als in Fig. 1 aufweist. Zusätzlich zur geneigten Position 13 befindet sich der zweite Boden 11 ebenfalls in einer geneigten Position. Dazu ist der zweite Boden 11 am hinteren Ende des Behälters 1 im Bereich der Seitenwand 12 nach oben angehoben, um ein erhöhtes Gefälle und dadurch die vollständige Entleerung des Behälters 2 zu ermöglichen. Dies bewirkt in gleicher Weise wie bei der Lageveränderung von Position 13 zu Position 14 eine Verlagerung des Gesamtschwerpunkts der Stückgütermenge 2, wobei dieser nun in Richtung zur Mitnehmervorrichtung 6 wandert, und somit eine erhöhte Druckbeaufschlagung der Mitnehmervorrichtung 6 bewirkt. Die Anhebung des Bodens 11 kann in Abhängigkeit des Füllzustands des Behälters 1, der Rolleigenschaften der Stückgüter 3 und ab- oder unabhängig von der Neigung des Behälterabschnitts 4 gewählt werden. Die Lage des Drehpunkts 18 des Bodens 11 kann entlang des Behälterabschnitts 4 verstellt werden.

Als Stückgüter 3 sind bei der in den Figuren 1 und 2 gezeigten Vorrichtung zum Vereinzeln in Papier oder Kunststoff rollierten Münzen vorgesehen.

## Patentansprüche

1. Vorrichtung zum Vereinzeln von einer in einem Behälter gestapelten Stückgütermenge (2) aus einer Vielzahl von rollbaren Stückgütern (3), wobei der Behälter (1) zumindest einen die Stückgütermenge (2) von unten stützenden Behälterabschnitt (4) und eine Auslassöffnung (5) aufweist, in deren Anschluss eine an der Auslassöffnung (5) vorbei bewegbare Mitnehmervorrichtung (6) vorgesehen ist, wobei die Zuführung des Stückguts (3) aus dem Behälter (1) in die Mitnehmervorrichtung (6) dadurch erfolgt, dass die Mitnehmervorrichtung (6) infolge eines aus dem Eigengewicht des Stückguts (3) resultierenden Druckes beaufschlagt wird,
**dadurch gekennzeichnet,**
**dass** die Neigung mindestens eines Teils des Behälterabschnittes (4), der die Stückgütermenge (2) von unten stützt, verstellbar ist, so dass die Druckbeaufschlagung auf die Mitnehmervorrichtung (6) wahlweise verminderbar ist.

2. Vorrichtung nach Anspruch 1,
**dadurch gekennzeichnet,**
**dass** das gesamte Behälter (1) verschwenkbar gelagert ist.

3. Vorrichtung nach Anspruch 2,
**dadurch gekennzeichnet,**
**dass** der Behälter (1) quer zur Bewegungsrichtung der Mitnehmervorrichtung (6) verschwenkbar ist.

4. Vorrichtung nach Anspruch 2 oder 3,
**dadurch gekennzeichnet,**
**dass** der Behälter (1) auf einem außermittig angeordneten Schwenklager (8) gelagert ist.

5. Vorrichtung nach Anspruch 4,
**dadurch gekennzeichnet,**
**dass** das Schwenklager (8) auf der von der Mitnehmervorrichtung (6) weg gerichteten Seite des Behälters (1) angeordnet ist.

6. Vorrichtung nach einem der Ansprüche 4 oder 5,
**dadurch gekennzeichnet,**
**dass** das Schwenklager (8) an dem Behälter (1) entlang des von unten stützenden Behälterabschnittes (4) verschiebbar angeordnet ist.

7. Einrichtung zum Vereinzeln von Münzrollen mit einer Vorrichtung nach einem der vorhergehenden Ansprüche.

8. Verfahren zum Vereinzeln mit einer Vorrichtung nach Anspruch 1,
**dadurch gekennzeichnet,**
**dass** die Neigung mindestens eines Teils des Behälterabschnittes (4), der die Stückgütermenge (2) von unten stützt, verstellt wird, so dass die Druckbeaufschlagung auf die Mitnehmervorrichtung (6) wahlweise vermindert wird.

9. Verfahren nach Anspruch 8,
**dadurch gekennzeichnet,**
**dass** die Verstellung der Neigung in regelmäßigen Zeitabständen erfolgt.

10. Verfahren nach Anspruch 8,
**dadurch gekennzeichnet,**
**dass** die Verstellung der Neigung im Falle einer Störung der Mitnehmervorrichtung (6) erfolgt.

11. Verfahren nach einem der Ansprüche 8 bis 10,
**dadurch gekennzeichnet,**
**dass** eine mindestens teilweise Rückstellung der Neigung mittels einer Rückstellfeder erfolgt.

12. Verfahren nach einem der Ansprüche 8 bis 11,
**dadurch gekennzeichnet,**
**dass** die Verstellung der Neigung mit einer Vibrationsbeaufschlagung zumindest eines Teils des Behälters (1) kombiniert wird.

## Claims

1. A device for singularizing a quantity of piece goods (2) stacked in a container from a plurality of rollable piece goods (3), with the container (1) comprising at least one container section (4) supporting the quantity of piece goods (2) from below and an outlet opening (5), adjacent to which there is provided an entrainment device (6) which can be moved past the outlet opening (5), with the supply of the piece good (3) from the container (1) into the entrainment device (6) occurring in such a way that the entrainment device (6) is pressurized by a pressure resulting from the own weight of the piece good (3),
**characterized in that**
the inclination of at least a part of the container section (4) supporting the quantity of piece goods (2) from below is adjustable, so that the pressurization on the entrainment device (6) can be reduced in an optional manner.

2. A device according to claim 1, **characterized in that** the entire container (1) is held in a swivelable manner.

3. A device according to claim 2, **characterized in that** the container (1) can be swiveled transversally to the direction of movement of the entrainment device (6).

4. A device according to claim 2 or 3, **characterized in that** the container (1) is held on a pivot bearing (8) arranged off-center.

5. A device according to claim 4, **characterized in that** the pivot bearing (8) is arranged on the side of the container (1) averted from the entrainment device (6).

6. A device according to one of the claims 4 or 5, **characterized in that** the pivot bearing (8) is arranged in a displaceable manner on the container (1) along the container section (4) which supports from below.

7. A device for singularizing rolls of coins with a device according to one of the preceding claims.

8. A method for singularizing with a device according to claim 1,
**characterized in that**
the inclination of at least a part of the container section (4) which supports the quantity of piece goods (2) from below is adjusted, so that the pressurization on the entrainment device (6) is optionally reduced.

9. A method according to claim 8, **characterized in that** the adjustment of the inclination occurs in regular time intervals.

10. A method according to claim 8, **characterized in that** the adjustment of the inclination occurs in the case of a malfunction of the entrainment device (6).

11. A method according to one of the claims 8 to 10, **characterized in that** there is at least a partial reversal of the inclination by means of a pull-back spring.

12. A method according to one of the claims 8 to 11, **characterized in that** the adjustment of the inclination is combined with a vibration activation of at least a part of the container (1).

## Revendications

1. Dispositif pour séparer une quantité d'articles unitaires (2) entassée dans un récipient et composée d'une pluralité d'articles unitaires (3) capables de rouler, dans lequel le récipient (1) possède au moins une partie de récipient (4) soutenant la quantité d'articles unitaires (2) par en-dessous et une ouverture de sortie (5), à la suite de laquelle est prévu un dispositif d'entraînement (6) mobile devant l'ouverture de sortie (5), l'arrivée des articles unitaires (3) hors du récipient (1) vers le dispositif d'entraînement (6) étant réalisée par le fait que le dispositif d'entraînement (6) est soumis à une pression résultant du poids propre de l'article unitaire (3), **caractérisé en ce qu'**une inclinaison d'au moins une partie de la partie de récipient (4) soutenant la quantité d'articles unitaires (2) par en-dessous est réglable, de sorte que la pression appliquée sur le dispositif d'entraînement (6) peut être réduite sélectivement.

2. Dispositif selon la revendication 1, **caractérisé en ce que** l'ensemble du récipient (1) est supporté avec possibilité de pivotement.

3. Dispositif selon la revendication 2, **caractérisé en ce que** le récipient (1) peut pivoter perpendiculairement à l'axe de déplacement du dispositif d'entraînement (6).

4. Dispositif selon la revendication 2 ou 3, **caractérisé en ce que** le récipient (1) est supporté sur un palier pivotant (8) disposé en position excentrée.

5. Dispositif selon la revendication 4, **caractérisé en ce que** le palier pivotant (8) est disposé sur le côté du récipient (1) orienté à l'opposé du dispositif d'entraînement (6).

6. Dispositif selon l'une quelconque des revendications 4 ou 5, **caractérisé en ce que** le palier pivotant (8) est disposé sur le récipient (1) de façon à pouvoir coulisser le long de la partie de récipient (4) assurant le support par en-dessous.

7. Dispositif pour séparer des rouleaux de pièces de monnaie avec un dispositif selon l'une quelconque des revendications précédentes.

8. Procédé de séparation avec un dispositif selon la revendication 1, **caractérisé en ce que** l'inclinaison d'au moins une partie de la partie de récipient (4) soutenant les quantités de produits unitaires (2) par en-dessous est réglée de telle sorte que la pression exercée sur le dispositif d'entraînement (6) est réduite sélectivement.

9. Procédé selon la revendication 8, **caractérisé en ce que** le réglage de l'inclinaison est réalisé à intervalles réguliers dans le temps.

10. Procédé selon la revendication 8, **caractérisé en ce que** le réglage de l'inclinaison est réalisé en cas de dysfonctionnement du dispositif d'entraînement (6).

11. Procédé selon l'une quelconque des revendications 8 à 10, **caractérisé en ce qu'**un retour au moins partiel de l'inclinaison est réalisé au moyen d'un ressort de rappel.

12. Procédé selon l'une quelconque des revendications 8 à 11, **caractérisé en ce que** le réglage de l'inclinaison est combiné avec l'application de vibrations sur au moins une partie du récipient (1).
